# EUROPEAN PATENT APPLICATION

(11) **EP 1 970 988 A1**
(43) Date of publication of application: **17.09.2008**
(21) Application number: 06833935.7
(22) Date of filing: 04.12.2006
(51) Int. Cl.: H01M 8/06, H01M 8/02, H01M 8/12, H01M 8/24

(54) **FUEL CELL**

(30) Priority: 05.12.2005 JP 2005350415
(71) Applicant: Mitsubishi Materials Corporation, Tokyo 100-0004 (JP); THE KANSAI ELECTRIC POWER CO., INC., Osaka-shi, Osaka 530-8270 (JP)
(72) Inventor: HIRATA, Katsuya, Naka-shi, Ibaraki 3110102 (JP); MIYAZAWA, Takashi, Naka-shi, Ibaraki 3110102 (JP); MURAKAMI, Naoya, Naka-shi, Ibaraki 3110102 (JP); CHITOSE, Norihisa, Naka-shi, Ibaraki 3110102 (JP)
(74) Representative: Charlton, Peter John
(86) International application number: PCT/JP2006/324178
(87) International publication number: WO 2007/066619

(57) **Abstract**

The present invention provides a highly-efficient fuel cell having a uniform temperature in the pile direction of the fuel cell stacks piled in the vertical direction. In order to achieve the object, the fuel cell (1) includes a plurality of power generating cells (7) and separators (10) which are alternately layered and fixed on a mounting base (18) to constitute a fuel cell stack (3). A plurality of the fuel cell stacks (3) are piled at least in the height direction at the center of a generation reaction chamber (21). A fuel reformer (30) is arranged in the height direction in the vicinity of the fuel cell stacks (3). An introduction pipe (34) of a non-reformed fuel gas is connected to the upper end of the fuel reformer (30) and a discharge pipe (32) of the reformed fuel gas is connected to the lower end.

## Description

### Technical Field

The present invention relates to a fuel cell in which a plurality of fuel cell stacks are piled in the heightwise direction, and in particular to a fuel cell in which the temperature distribution in the pile direction of the fuel cell stacks is made uniform.

### Background Art

In these years, fuel cells in which the chemical energy contained in fuel is directly converted into electrical energy have been attracting attention as highly efficient and clean electricity generating apparatuses; in particular, solid oxide fuel cells have many advantages such that solid oxide fuel cells are high in power generation efficiency, and higher in operation temperature than other fuel cells so as to enable effective utilization of exhaust heat, and hence are being studied and developed as third generation fuel cells for use in power generation.

Such a solid oxide fuel cell has a laminated structure in which an air electrode layer and a fuel electrode layer sandwich therebetween a solid electrolyte layer formed of an oxide ion conductor, and at the time of power generation, an oxidant gas (oxygen) is supplied as a reaction gas to the air electrode layer and a fuel gas (for example, H₂ and CO) is supplied as another reaction gas to the fuel electrode layer.

In a power generating cell, oxygen (for example, air) supplied to the air electrode layer passes through the pores in the air electrode layer to reach the vicinity of the interface with the solid electrolyte layer, and there the oxygen receives electrons from the air electrode layer to be ionized into an oxide ion (O²⁻). This oxide ion migrates to diffuse in the solid electrolyte layer toward the fuel electrode layer to reach the vicinity of the interface with the fuel electrode layer, reacts there with the fuel gas to release electrons to the fuel electrode layer, and at the same time, discharges the reaction products such as H₂O and CO₂ to the outside of the power generating cell as exhaust gas. The electrons generated by the electrode reaction can be taken out as electromotive force through an external load on another route.

Output power of such a single power generating cell is extremely small, and accordingly, a fuel cell stack formed by laminating in series a large number of such power generating cells to boost the output power is usually used. When a further higher output power is desired, a plurality of such fuel cell stacks are connected (piled) to be practically used.

In a fuel cell in which a plurality of fuel cell stacks are stacked in the heightwise direction and housed in a sealed container, heat release from fuel cell stacks located at both ends is remarkably larger as compared to the other fuel cell stacks, and hence the temperature of the fuel cell stacks located at both ends is decreased as compared to the fuel cell stacks in the middle tiers, and the temperature of the atmosphere in the interior of the container is higher in the upper portion of the container than in the lower portion of the container due to the effect of natural convection so that the fuel cell stack located at the lower end tends to be decreased in temperature as compared to the fuel cell stack located at the upper end. The fuel cell stacks in the lower temperature portion are reduced in power generation performance as compared to the fuel cell stacks in the higher temperature portion, and consequently the performance as the fuel cell is degraded.

### Disclosure of the Invention

The present invention was achieved in view of such problems as described above. An object of the present invention is to provide a highly efficient fuel cell in which the temperature is equalized in the pile direction of a plurality of fuel cell stacks piled in the heightwise direction.

For the purpose of achieving the above-described object, the present invention provides a fuel cell in which fuel cell stacks are housed in a power generating reaction chamber, each of the fuel cell stacks has a plurality of power generating cells and a plurality of separators which are alternately laminated with each other and fixed on a mounting base to thereby form the fuel cell stack, and at the time of operation, a reformed fuel gas and an oxidant gas are supplied to the fuel cell stacks to produce a power generating reaction, wherein: the fuel cell stacks are piled at least in the heightwise direction in the central area of the power generating reaction chamber, a fuel reformer is arranged in the heightwise direction in the vicinity of the fuel cell stacks, an inlet pipe for introducing an unreformed fuel gas is connected to the upper end of the fuel reformer, and an outlet pipe for discharging the reformed fuel gas is connected to the lower end of the fuel reformer.

In the fuel cell, the fuel reformer is preferably disposed close to the fuel cell stacks and extended from the uppermost tier to the lowermost tier of the fuel cell stacks.

Additionally, in the fuel cell, a possible configuration is such that a fuel heat exchanger extending in the heightwise direction is disposed in the power generating reaction chamber, a fuel gas supply pipe introducing the unreformed fuel gas from the outside is connected to the lower end of the fuel heat exchanger and the inlet pipe for introducing the unreformed fuel gas is connected to the upper end of the fuel heat exchanger.

Additionally, in the fuel cell, another possible configuration is such that an air distribution pipe for supplying the oxidant gas to the interior of each of the fuel cell stacks is connected to each of the fuel cell stacks, the air distribution pipe is connected to the lower end of each of the fuel cell stacks above a heightwise midpoint and the air distribution pipe is connected to the upper end of each of the fuel cell stacks below the heightwise midpoint.

Further, in the fuel cell, a preheating burner can be disposed at a location facing the lowermost tier of the fuel cell stack in the power generating reaction chamber for the purpose of raising the temperature of the lowermost tier of the fuel cell stack.

The present invention can be applied to a solid oxide fuel cell of a sealless structure for discharging a residual gas unused for a power generating reaction from the peripheral portion of each of the power generating cells.

According to the present invention, the fuel reformer is disposed in the heightwise direction in the vicinity of the fuel cell stacks piled in the heightwise direction, the fuel gas is supplied to the interior of the fuel reformer from a gas inlet disposed at the upper end of the fuel reformer, and hence the absorbed heat amount at the time of reforming reaction in the fuel reformer is largest at the upper portion of the reformer and decreases toward the lower portion. Due to this heat absorption, the temperature of each of the fuel cell stacks close to the upper portion of the reformer can be decreased. Consequently, the fuel cell stacks piled in the heightwise direction are made uniform in temperature in the pile direction, and the power generation efficiency can be improved.

Additionally, in the present invention, the fuel reformer is closely disposed to the fuel cell stacks and extended from the uppermost tier to the lowermost tier of the fuel cell stacks, and hence the decrease in temperature due to the heat absorption by the reforming reaction is largest at the uppermost tier of the fuel stack, and smallest at the lowermost tier of the fuel cell stack. Consequently, the temperature difference between the uppermost tier of the fuel cell stack and the lowermost tier of the fuel cell stack is alleviated, and the fuel cell stacks piled in the heightwise direction are made uniform in temperature in the pile direction.

Additionally, in the present invention, in the course of the upward flowing of the fuel gas introduced from the lower end of the fuel heat exchanger extending in the heightwise direction, the fuel gas is increased in temperature by the radiated heat from the fuel cell stacks to be converted into a high temperature fuel gas, and the high temperature fuel gas is supplied to the gas inlet of the fuel reformer. Consequently, a stable reforming reaction is conducted in the fuel reformer.

Additionally, according to the present invention, in the fuel cell stacks above the heightwise midpoint, air is supplied from the lower end of each of the fuel cell stacks through the air distribution pipe, and in the fuel cell stacks below the heightwise midpoint, air is supplied from the upper end of each of the fuel cell stacks through the air distribution pipe; thus, air flows in the fuel cell stacks upward or downward from the heightwise midpoint portion of the pile of the fuel cell stacks, the air is increased in temperature in the course of such upward or downward flowing, and hence fuel cell stacks at both ends, lower in temperature as compared to the fuel cell stacks in the middle tiers, are increased in temperature by the air having been increased in temperature. Consequently, the fuel cell stacks piled in the heightwise direction are made uniform in temperature in the pile direction.

Additionally, in the present invention, the lowermost tier of the fuel cell stack particularly low in temperature efficiently receives the radiated heat from the preheating burner, hence the fuel cell stacks piled in the heightwise direction are made uniform in temperature in the pile direction, and the temperature increase rate of the lowermost tier of the fuel cell stack is improved to thereby shorten the startup time of the fuel cell.

### Brief Description of the Drawings

Figure 1 is a top view illustrating the schematic internal structure of a fuel cell according to the present invention;
Figure 2 is a side view illustrating the schematic internal structure of the fuel cell according to the present invention;
Figure 3 is a view illustrating the schematic configuration of a main part of a fuel cell stack; and
Figure 4 is a view illustrating the flow of the reaction gas supplied to the fuel cell stacks.

### Description of Symbols

- 1: Fuel cell (solid oxide fuel cell)
- 3: Fuel cell stack
- 7: Power generating cell
- 10: Separator
- 15: Fuel gas supply pipe
- 18: Mounting base
- 21: Power generating reaction chamber
- 24: Preheating burner
- 29: Air distribution pipe
- 30: Fuel reformer
- 32: Outlet pipe
- 34: Inlet pipe
- 40: Fuel heat exchanger
- 50: Air heat exchanger

### Best Mode for Carrying Out the Invention

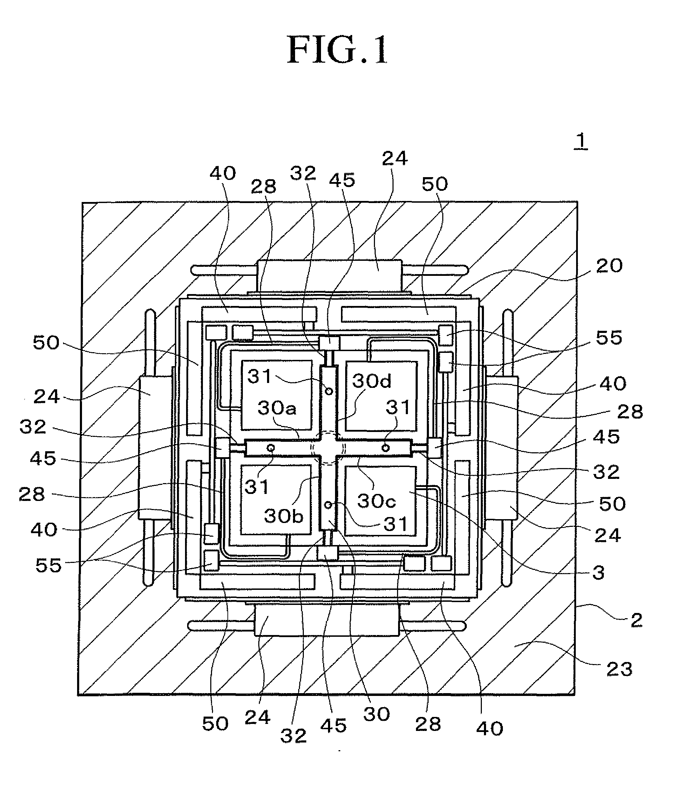

Hereinafter, an embodiment of the present invention is described with reference to Figures 1 to 4.

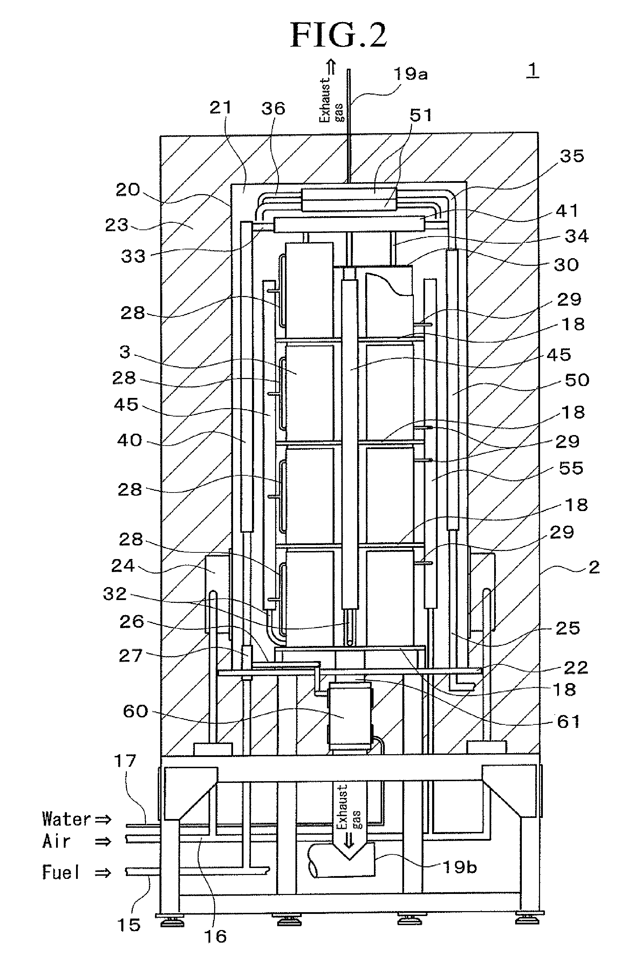

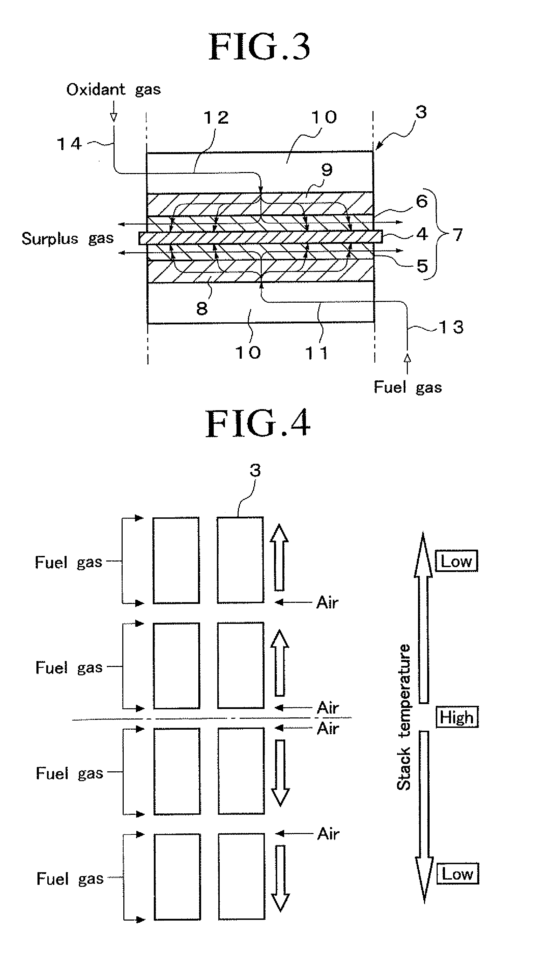

Figure 1 and Figure 2 show the schematic internal structure of a solid oxide fuel cell to which the present invention is applied, Figure 3 shows the schematic configuration of a main part of a fuel cell stack, and Figure 4 shows the flow of the reaction gas supplied to fuel cell stacks.

In Figure 1 and Figure 2, reference numeral 1 denotes a solid oxide fuel cell (fuel cell module), reference numeral 2 denotes a module can, reference numeral 20 denotes an internal can, and a heat insulating material 23 is disposed between the module can 2 and the internal can 20. The internal can 20 maintains the interior of the can (namely, a power generating reaction chamber 21) in an airtight condition. In the central area of the power generating reaction chamber 21, a plurality of fuel cell stacks 3 are disposed so as for the lamination direction to be vertical.

As shown in Figure 3, each of the fuel cell stacks 3 is obtained by laminating a plurality of unit cells to form a laminate, and by fixing the laminate composed of the unit cells with an electrically insulated member (not shown) to unitize the laminate, wherein a unit cell includes a power generating cell 7 including a fuel electrode layer 5 and an air electrode layer 6 disposed respectively on both sides of a solid electrolyte layer 4, a fuel electrode current collector 8 outside the fuel electrode layer 5, an air electrode current collector 9 outside the air electrode layer 6, and separators 10 outside the current collectors 8 and 9.

Here, the solid electrolyte layer 4 is formed of a stabilized zirconia doped with yttria (YSZ) or the like. The fuel electrode layer 5 is formed of a metal such as Ni or a cermet such as Ni-YSZ, and the air electrode layer 6 is formed of LaMnO₃ or LaCoO₃ or the like. The fuel electrode current collector 8 is formed of a spongy porous sintered metal plate made of Ni or the like, the air electrode current collector 9 is formed of a spongy porous sintered metal plate made of Ag or the like, and the separator 10 is formed of stainless steel or the like.

The separator 10 has function of electrically connecting the power generating cells 7, and of supplying the reaction gases to the power generating cells 7, and is provided with a fuel gas passage 11 which introduces the fuel gas, supplied from the fuel gas manifold 13, from the outer surface of the separator 10 and discharges the fuel gas from a central portion of the separator 10 facing the fuel electrode current collector 8 and with an air passage 12 which introduces the air, supplied from an air manifold 14, from the outer surface of the separator 10 and discharges the air from a central portion of the separator 10 facing the air electrode current collector 9.
Additionally, the above-described fuel gas manifold 13 and the above-described air manifold 14 are both formed inside each of the fuel cell stacks 3; inside the stacks, the fuel gas manifold 13 is connected to the fuel distribution pipes 28 of the below-described fuel buffer tanks 45, and the air manifold 14 is connected to the air distribution pipes 29 of the below-described air buffer tanks 55.

Additionally, the fuel cell stack 3 has a sealless structure in which no gas leakage preventing seal is provided in the peripheral portion of the power generating cell 7. At the time of operation, as shown in Figure 3, the reaction gases (fuel gas and air) discharged toward the power generating cell 7 from the central portion of the separator 10, respectively, through the fuel gas passage 11 and the air passage 12, are supplied to the whole area of the fuel electrode layer 5 and to the whole area of the air electrode layer 6 while the reaction gases (fuel gas and air) are being made to diffuse toward the peripheral portion of the power generating cell 7 so as to allow the power generating reaction to take place; and the residual gas (exhaust gas) remaining unconsumed in the power generating reaction is freely discharged to the outside from the peripheral portion of the power generating cell 7.

In the present embodiment, a high output fuel cell module 1 is formed as follows: the fuel cell stacks 3 having the above-described configuration are arranged in the vicinity of the center of the power generating reaction chamber 21 in a two columns-by-two rows array in terms of a plan view, further four tiers of fuel cell stacks 3 are stacked in the heightwise direction through the intermediary of a mounting base 18, and thus sixteen fuel cell stacks 3 in total are assembled and disposed in an integrated manner.
Additionally, as shown in Figure 2, exhaust gas pipes 19a and 19b are provided in the top central portion and the bottom central portion of the power generating reaction chamber 21, respectively, for the purpose of discharging to the outside the high-temperature exhaust gas having been discharged into the interior of the power generating reaction chamber 21 from each of the fuel cell stacks 3.

Additionally, in the interior of the power generating reaction chamber 21, a cross shaped fuel reformer 30 having flat box-shaped wing sections 30a, 30b, 30c and 30d each filled with a reforming catalyst is disposed in between the mutually facing sides of the fuel cell stacks 3 disposed in a two columns-by-two rows array in terms of a plan view in such a way that the fuel reformer 30 extends from the uppermost tier of the fuel cell stacks 3 to the position close to the lowermost tier of the fuel cell stacks 3, and is fixed to the stack mounting base 22 located in the lower portion of the power generating reaction chamber 21 along with the above-described plurality of the fuel cell stacks 3.

As described above, in the present embodiment, the fuel reformer 30 is disposed at a position that allows efficient reception of the radiated heat from the fuel cell stacks 3 and undergoes the highest temperature; a gas inlet 31 for introducing the fuel gas is provided at the upper end of each of wing sections 30a to 30d wherein the upper end of each wing section is located in the upper portion of the power generating reaction chamber 21 and the upper portion undergoes an atmosphere higher in temperature than the lower portion due to the effect of natural convection; and an outlet pipe 32 for discharging the reformed gas is provided at the lower end of each of the wing sections 30a to 30d.

Additionally, in the interior of the power generating reaction chamber 21, around the outer periphery of the fuel cell stacks 3 and the outer periphery of the fuel reformer 30, lateral fuel heat exchangers 40, fuel buffer tanks 45, lateral air heat exchangers 50, air buffer tanks 55 and the like are vertically-arranged along the heightwise direction of the fuel cell stacks 3. A fuel supply pipe 15 extending from the bottom of the module can 2 is connected to the lower end of each of the lateral fuel heat exchangers 40, and a warm air pipe 25 extending from a cooling jacket of a below-described burner 24 is connected to the lower end of each of the lateral air heat exchangers 50.

Additionally, the lateral fuel heat exchangers 40 and the lateral air heat exchangers 50 both have flat-box shapes so as to achieve space saving and to be capable of efficiently receiving the radiated heat from each of the fuel cell stacks 3, and are disposed in the vicinity of the inner wall of the internal can 20 so as to be away from the fuel cell stacks 3 disposed in the central region, wherein fins (not shown) are also disposed on the stack-facing sides of these heat exchangers so as to achieve the improvement of the heat exchange performance.
Specifically, the four lateral fuel heat exchangers 40 and the four lateral air heat exchangers 50 are disposed around the fuel cell stacks 3 so as to respectively face the wing sections 30a to 30d of the fuel reformer 30, and the lateral fuel heat exchangers 40 and the lateral air heat exchangers 50 are arranged alternately along the direction of the circumference of the fuel cell stacks 3 so as to face each other through the two columns of the fuel cell stacks 3 in terms of a plan view or through the two rows of the fuel cell stacks 3 in terms of a plan view.

Between these heat exchangers 40, 50 and the fuel cell stacks 3, the fuel buffer tanks 45 and the air buffer tanks 55 are disposed. The fuel buffer tanks 45 are disposed at the centers of the sides of the two columns-by-two rows array of the fuel cell stacks 3 in terms of a plan view, and the air buffer tanks 55 are disposed at the corners of the two columns-by-two rows array in terms of a plan view.

Additionally, above the fuel cell stacks 3, a top fuel heat exchanger 41 and a top air heat exchanger 51 are disposed both in a horizontal direction. These are flat-plate heat exchangers with fins.

The top fuel heat exchanger 41 is a heat exchanger located downstream of the above-described lateral fuel heat exchangers 40, the inlets of the top fuel heat exchanger 41 are connected through pipes 33 respectively to the upper ends of the lateral fuel heat exchangers 40, and the outlets of the top fuel heat exchanger 41 are connected through inlet pipes 34 respectively to the gas inlets 31 of the above-described fuel reformer 30. It is to be noted that the outlet pipes 32 of the fuel reformer 30 are connected to the lower ends of the above-described fuel buffer tanks 45.
The top air heat exchanger 51 is a heat exchanger located downstream of the above-described lateral air heat exchangers 50, the inlets of the top air heat exchanger 51 are connected through pipes 35 respectively to the upper ends of the lateral air heat exchangers 50, and the outlets of the top air heat exchanger 51 are connected through pipes 36 respectively to the upper ends of the above-described air buffer tanks 55.

The outlets of the fuel buffer tanks 45 are connected through a plurality of fuel distribution pipes 28 respectively to the fuel cell stacks 3, and the outlets of the air buffer tanks 55 are connected through a plurality of air distribution pipes 29 respectively to the fuel cell stacks 3.
The fuel distribution pipes 28 extending from the fuel buffer tanks 45 are connected respectively to the upper ends and lower ends of the fuel cell stacks 3, and the air distribution pipes 29 extending from the air buffer tanks 55 are connected respectively to the lower ends of the fuel cell stacks 3 in the upper two tiers and to the upper ends of the fuel cell stacks 3 in the lower two tiers.

Additionally, four startup preheating burners 24 (for example, infrared burners) respectively facing the fuel cell stacks 3 are disposed on the lower sides of the internal can 20 in such a way that the respective fuel cell stacks 3 can receive the radiated heat from the preheating burners 24.
These preheating burners 24 are disposed for the purpose of improving the temperature increase rate of the lower fuel cell stacks 3 so as to shorten the startup time. In order to enable the stacks to directly and efficiently receive the radiated heat from the preheating burners 24, the lateral fuel heat exchangers 40 and the lateral air heat exchangers 50 are formed to have lengths so that the lower ends thereof are located above the preheating burners 24, whereby the heat exchangers 40 and 50 are located so as not to face the front faces of the burners.
In the present embodiment, cooling jackets (not shown) are disposed on the lateral and back sides of each of the burners 24, and external air is introduced into the interiors of the jackets through an air supply pipe 16 to cool the burner bodies, and consequently, the burner bodies are prevented from being heated to excessively high temperatures. The cooling air (warmed air) from the cooling jackets is introduced into the above-described lateral air heat exchangers 50 through warm air pipes 25.

On the other hand, a steam generator 60 is disposed beneath the internal can 20.
The steam generator 60 is a heat exchanger to produce high temperature steam for use in fuel reforming. Since the generation of steam requires a large amount of heat rather than a high temperature, the steam generator 60 is located away from the power generating reaction chamber 21 and disposed in a lower exhaust gas pipe 19b which is located outside of the above-described heat exchangers 40 and 50 to constitute a low temperature portion.
It is to be noted that, in the present embodiment, for the purpose of enabling efficient utilization, as a heat source, of the exhaust gas discharged to the outside from the interior of the power generating reaction chamber 21, the diameter of the lower exhaust gas pipe 19b is made larger than the diameter of the upper exhaust gas pipe 19a such that a large amount of exhaust gas is discharged from the lower exhaust gas pipe 19b.

A water supply pipe 17 is connected to the steam generator 60, the externally supplied water from the water supply pipe 17 changes into steam by undergoing heat exchange, in the water flow path in the steam generator 60, with the high temperature exhaust gas discharged from the power generating reaction chamber 21. The steam outlet is connected, in the interior of the power generating reaction chamber 21, to a fuel mixing unit 27 of the fuel supply pipe 15 through the intermediary of a steam pipe 26.

Additionally, a large number of ceramic beads are filled in the water flow path of the steam generator 60. By filling the ceramic beads, the hunting of steam is prevented such that a stable amount of steam can be supplied to the interior of the power generating reaction chamber 21; additionally, by using high-thermal-conductivity beads such as alumina beads, the heat exchangeability of the steam generator 60 can be improved.

Additionally, a honeycomb combustion catalyst is disposed in the lower exhaust gas pipe 19b, in particular, in the exhaust gas inlet portion 61 of the steam generator 60. In the present embodiment, the unburned methane in the exhaust gas is combusted with the aid of the combustion catalyst, and the combusted gas is used as a heat source for the steam generator 60. In addition to the honeycomb catalyst, a combustion catalyst coating material may also be applied as the combustion catalyst.

In the fuel cell 1 having the above-described configuration, at the time of operation, an external fuel gas (for example, town gas) is introduced into the power generating reaction chamber 21 through the fuel supply pipe 15, and in the power generating reaction chamber 21, the external fuel gas and the high temperature steam from the steam generator 60 flow into each other in the fuel mixing unit 27 to form a mixed gas; the mixed gas is introduced into each of the lateral fuel heat exchangers 40 disposed around the periphery of the fuel cell stacks 3, from the lower portion of each of the fuel heat exchangers 40.
In the course of flowing upward in the interior of the lateral fuel heat exchangers 40, the mixed gas receives the radiated heat from the fuel cell stacks 3 facing the lateral fuel heat exchangers 40 so as to be increased in temperature, and is guided to the upper portions, above the stacks, having a higher atmospheric temperature; the mixed gas is further increased in temperature in the top fuel heat exchanger 41 so as to become a high temperature mixed gas.

In the upper end of the fuel reformer 30, the high temperature mixed gas is introduced into the interior of the reformer from the gas inlets 31 in the ends of the respective wing sections 30a to 30d. By providing the gas inlets 31 in the end portions of the respective wing sections 30a to 30d wherein the end portions obtain radiated heat in a larger amount than in the central portions, the radiated heat from each of the fuel cell stacks 3 can be received efficiently.
In the course of flowing downward in the interior of each of the wing sections 30a to 30d, the introduced gas undergoes a reforming reaction due to the reforming catalyst. The reforming reaction is an endothermic reaction, and the heat required for the reforming reaction is obtained by recovering the radiated heat from the fuel cell stacks 3. The absorbed heat amount due to the reforming reaction is larger in the upper portion of the reformer higher in temperature, and is decreased toward the lower portion of the reformer; thus, such a change of the absorbed heat amount enables the thermal balance in the heightwise direction of the fuel cell stacks 3 to be made uniform.

The hydrogen-rich fuel gas reformed in the fuel reformer 30 is discharged from each of the outlet pipes 32 in the downstream portion (lower portion), introduced into and stored in the fuel buffer tanks 45 through pipes, and thereafter distributed to each of the fuel cell stacks 3 (specifically, the fuel gas manifold 13).
In this case, as illustrated in Figure 4, the fuel gas in the fuel buffer tanks 45 is supplied to the upper end portion and the lower end portion of each of the fuel cell stacks 3. In this way, by supplying the fuel gas to the top and bottom (both ends) of each of the stacks, the pressure drop difference in the course of the gas flow is alleviated, and the fuel gas can be stably supplied to each of the power generating cells 7 in a manner evenly distributed over all the power generating cells 7. Accordingly, the power generation performances of the respective power generating cells are made uniform, and thus, the power generation efficiency can be improved.

On the other hand, external air (cooling air) is supplied to the cooling jackets of the burners 24 through the air supply pipe 16, to cool the burner bodies, and then the cooling air passing through the cooling jackets is supplied through warm air pipes 25 to each of the lateral air heat exchangers 50 disposed around the periphery of the fuel cell stacks 3, from the lower portion of each of the lateral air heat exchangers 50.
In the course of flowing upward in the interior of each of the lateral air heat exchangers 50, the cooling air efficiently receives the radiated heat from each of the fuel cell stacks 3 facing the lateral air heat exchangers 50 to be increased in temperature, the cooling air is further increased in temperature in the top air heat exchangers 51 above the stacks, and thereafter the cooling air is introduced through pipes into and stored in the air buffer tanks 55, and is distributed to each of the fuel cell stacks 3 (specifically to the air manifold 14).
In this case, as shown in Figure 4, the air in the air buffer tanks 55 is supplied from the central portion, high in temperature, of the fuel cell module 1 (from the lower ends of the stacks in the upper two tiers and from the upper ends of the stacks in the lower two tiers), the air increased in temperature in the course of flowing upward or downward from the supplied positions increases the temperatures of the both ends of the stacks relatively low in temperature. In this way, the temperatures of the stacks are made uniform in the heightwise direction of the stacks.

Additionally, the warmed air from the top air heat exchanger 51 is introduced into each of the air buffer tanks 55 from the upper end thereof, and the external air from the air supply pipe 16 is introduced into each of the air buffer tanks 55 from the lower end of each of the air buffer tanks 55; accordingly, the stack temperature can also be controlled on the basis of the supply ratio between the preheated air and the external air.

The flow of the reaction gases (fuel gas and air) supplied to each of the fuel cell stacks 3 is as illustrated in Figure 3.

As described above, in the present invention, the fuel reformer 30 is disposed in the heightwise direction in the vicinity of the fuel cell stacks 3 piled in the heightwise direction in parallel piles, the fuel gas is supplied from the upper end of the fuel reformer 30, and hence the absorbed heat amount in the fuel reformer 30 at the time of reforming reaction is largest at the upper portion of the reformer and decreases toward the lower portion. Such heat absorption reduces the temperature difference between the uppermost tier of the fuel cell stacks 3 and the lowermost tier of the fuel cell stacks 3, and consequently, the fuel cell stacks 3 piled in the heightwise direction are made uniform in temperature in the pile direction.

Additionally, air is supplied from the lower ends of the fuel cell stacks 3 above the heightwise midpoint through the air distribution pipes 29, and air is supplied from the upper ends of the fuel cell stacks 3 below the heightwise midpoint through the air distribution pipes 29; thus, air flows upward or downward in the fuel cell stacks from the heightwise midpoint portion of the pile of the fuel cell stacks, and the air having been increased in temperature in the course of such upward or downward flowing increases the temperature of fuel cell stacks at both ends relatively lower in temperature. Consequently, the fuel cell stacks 3 piled in the heightwise direction are made uniform in temperature in the pile direction.

Additionally, the preheating burners 24 are disposed on the lower side of the internal can 20, and hence mainly the lowermost tier of the fuel cell stacks 3 low in temperature are increased in temperature by the radiated heat from the preheating burners 24. Consequently, the temperature difference between the uppermost tier of the fuel cell stacks 3 and the lowermost tier of the fuel cell stacks 3 is reduced, the fuel cell stacks 3 piled in the heightwise direction are made uniform in temperature in the pile direction, the temperature increase rate of the lowermost tier of the fuel cell stacks 3 is increased, and the startup time of the fuel cell module 1 is shortened.

Owing to the above-described operation, the heightwise temperature distribution of the fuel cell stacks piled in the heightwise direction in parallel piles is made uniform, and thus, a highly efficient fuel cell module 1 can be provided.

As described above, as for the fuel cell module 1 of the present embodiment, description has been made on the configuration in which a set of fuel cell stacks 3 is formed by disposing four fuel cell stacks 3 in a plane direction and such sets are piled in four tiers in the heightwise direction; however, the number of tiers is not limited to four, and the number of the fuel cell stacks in the set of fuel cell stacks disposed in a plane direction is also not limited to four.

### Industrial Applicability

According to the present invention, in the fuel cell in which a plurality of fuel cell stacks are piled in the heightwise direction, the temperature distribution in the pile direction of the fuel cell stacks can be made uniform.

## Claims

1. A fuel cell in which fuel cell stacks are housed in a power generating reaction chamber, each of the fuel cell stacks has a plurality of power generating cells and a plurality of separators which are alternately laminated with each other and fixed on a mounting base to thereby form the fuel cell stack, and at the time of operation, a reformed fuel gas and an oxidant gas are supplied to the fuel cell stacks to produce a power generating reaction, wherein:
the fuel cell stacks are piled at least in the heightwise direction in the central area of the power generating reaction chamber, a fuel reformer is arranged in the heightwise direction in the vicinity of the fuel cell stacks, an inlet pipe for introducing an unreformed fuel gas is connected to the upper end of the fuel reformer, and an outlet pipe for discharging the reformed fuel gas is connected to the lower end of the fuel reformer.

2. The fuel cell according to claim 1, wherein the fuel reformer is closely disposed to the fuel cell stacks and extended from the uppermost tier to the lowermost tier of the fuel cell stacks.

3. The fuel cell according to claim 1, wherein a fuel heat exchanger extending in the heightwise direction is disposed in the power generating reaction chamber, a fuel gas supply pipe introducing the unreformed fuel gas from the outside is connected to the lower end of the fuel heat exchanger and the inlet pipe for introducing the unreformed fuel gas is connected to the upper end of the fuel heat exchanger.

4. The fuel cell according to claim 1, wherein an air distribution pipe for supplying the oxidant gas to the interior of each of the fuel cell stacks is connected to each of the fuel cell stacks, the air distribution pipe is connected to the lower end of each of the fuel cell stacks above a heightwise midpoint and the air distribution pipe is connected to the upper end of each of the fuel cell stacks below the heightwise midpoint.

5. The fuel cell according to claim 1, wherein a preheating burner is disposed at a location facing the lowermost tier of the fuel cell stack in the power generating reaction chamber.

6. The fuel cell according to claim 1, wherein the fuel cell is a solid oxide fuel cell of a sealless structure for discharging a residual gas unused for a power generating reaction from the peripheral portion of each of the power generating cells.
